# EUROPEAN PATENT SPECIFICATION

(11) **EP 3 281 805 B1**
(45) Date of publication and mention of the grant of the patent: **12.12.2018**
(21) Application number: 17178558.7
(22) Date of filing: 29.06.2017
(51) Int. Cl.: B60C 9/02, B60C 15/00

(54) **PNEUMATIC TIRE**
LUFTREIFEN
PNEUMATIQUE

(30) Priority: 08.08.2016 JP 2016155255
(43) Date of publication of application: 14.02.2018
(73) Proprietor: Sumitomo Rubber Industries, Ltd., Kobe-shi, Hyogo-ken (JP)
(72) Inventor: YAMAMOTO, Tetsuya, Kobe-shi, Hyogo 651-0072 (JP)
(74) Representative: Manitz Finsterwald Patentanwälte PartmbB

(56) References cited:
- WO-A1-2015/129595
- WO-A1-2016/068908
- JP-B2- 3 016 621

## Description

### BACKGROUND OF THE INVENTION

### Field of the Invention

The present invention relates to a pneumatic tire. The features of the preamble of the independent claim are known from JP 3 016621 B2. Related technologies are known from WO 2016/068908 A1 and WO 2015/129595 A1.

### Description of the Background Art

Normally, a pneumatic tire includes a belt at the outer side of a carcass. The belt reinforces the carcass. Normally, the belt includes an inner layer and an outer layer. Each of the inner layer and the outer layer includes multiple cords aligned with each other, and a topping rubber. A typical material of the cords is steel.

When the tire rolls, the tire repeats deformation and restoration. At each shoulder portion of the tire, the edge of the belt greatly moves due to the deformation and the restoration. This can be a factor for damage (BEL) in which the cords are separated from the rubber at the edge of the belt. For improving the durability of the belt, it is important to inhibit BEL.

Japanese Laid-Open Patent Publication No. 4-317803 discloses a tire in which BEL is inhibited. In the tire, in the region from the vicinity of the maximum width position of the tire to the vicinity of each edge of a belt, a profile of a carcass projects outward of a natural equilibrium shape curve. Thus, the tension of the belt is increased in the vicinity of each edge of the belt. When the tire rolls, movement of the belt is inhibited.

In the tire in which the carcass projects outward of the natural equilibrium shape curve in the region from the vicinity of the maximum width position of the tire to the vicinity of each edge of the belt, a load applied to the vicinity of the edge of the belt is reduced. A part of the load applied to this portion is applied to a bead portion. In the tire, the load applied to the bead portion is increased. This can cause damage at the bead portion. For example, this can cause separation between the bead and the carcass or separation between a clinch and the carcass. This becomes a factor for a decrease in the durability of the bead portion.

In order to improve the durability of the bead portion, the carcass is composed of three or more plies, or a reinforcing layer such as a filler is inserted into the bead portion. These increase the tire weight. These increase the rolling resistance of the tire.

An object of the present invention is to provide a pneumatic tire that has a low weight, a low rolling resistance, and excellent durability.

### SUMMARY OF THE INVENTION

A pneumatic tire according to the present invention, as defined in the independent claim, includes a pair of beads, a carcass, and a belt. Each bead includes a core, a first apex extending from the core outward in a radial direction, and a second apex located outward of the first apex in an axial direction. The carcass includes a carcass ply. The carcass ply includes a main portion extending from one of the beads to the other of the beads and a turned-up portion passing between the first apex and the second apex and extending substantially in the radial direction. The belt is laminated at a radially outer side of the carcass. In a state where the tire is mounted on a normal rim, an internal pressure of the tire is set to be not less than 8% and not greater than 15% of a normal internal pressure, and no load is applied to the tire, when: a position of an axially outer edge of an inner surface of the carcass is denoted by P; a straight line passing through the position P and extending in the axial direction is defined as a reference line L; a position at which the inner surface of the carcass intersects a line that is normal to the inner surface of the carcass and is drawn from an axially outer edge of a portion where the carcass and the belt are in contact with each other is denoted by Q; a position on the inner surface of the carcass to which position a distance in the radial direction from a bead base line is 1.5 times of a distance in the radial direction from the bead base line to an end of the first apex is denoted by R; and a circular arc having a center on the reference line L and passing through the position Q and the position R is defined as a reference circular arc C0, a contour of the inner surface of the carcass is located outward of the reference circular arc C0, between the position P and the position Q. An entirety of an outer surface of each side portion of the tire expands outward when the tire is inflated with air such that the internal pressure thereof that is not less than 8% and not greater than 15% of the normal internal pressure is changed to the normal internal pressure.

Preferably, from the position P to the position R, the contour of the inner surface of the carcass substantially coincides with the circular arc C0.

Between the position P and the position Q, the contour of the inner surface of the carcass includes three or more outwardly convex circular arcs that are tangent to each other.

When a circular arc extending from the position P substantially outward in the radial direction, of the circular arcs included in the contour of the inner surface of the carcass, is denoted by C1, a ratio (R1/RO) of a radius of curvature R1 of the circular arc C1 relative to a radius of curvature RO of the reference circular arc C0 is not less than 1.1 and not greater than 1.5.

Preferably, a contour of an inner surface of the turned-up portion includes, at an inner side of the reference line L, a circular arc CR extending substantially inward in the radial direction. When a circular arc extending from the position P substantially outward in the radial direction, of the circular arcs included in the contour of the inner surface of the carcass, is denoted by C1, a ratio (Rr/R1) of a radius of curvature Rr of the circular arc CR relative to a radius of curvature R1 of the circular arc C1 is not greater than 0.9.

Preferably, the tire is a tire, for a small truck, whose normal internal pressure is not less than 350 kPa and not greater than 600 kPa.

The present inventors have made detailed examination for a bead structure for improving the durability of each bead portion in a tire in which the contour of a carcass is caused to project outward of a natural equilibrium shape curve in the region from the vicinity of the maximum width position of the tire to the vicinity of each edge of the belt. As a result, the present inventors have found that a load to the bead portion which is increased by causing the carcass to have the above structure is effectively alleviated by appropriately adjusting the shape of the carcass at the bead portion.

In the pneumatic tire according to the present invention, in a state where the tire is inflated with air such that the internal pressure thereof is not less than 8% and not greater than 15% of the normal internal pressure, when: the position of the axially outer edge of the inner surface of the carcass is denoted by P; the straight line passing through the position P and extending in the axial direction is defined as a reference line L; the position at which the inner surface of the carcass intersects the line that is normal to the inner surface of the carcass and is drawn from the axially outer edge of the portion where the carcass and the belt are in contact with each other is denoted by Q; the position on the inner surface of the carcass to which position the distance in the radial direction from the bead base line is 1.5 times of the distance in the radial direction from the bead base line to the end of the first apex is denoted by R; and the circular arc having a center on the reference line L and passing through the position Q and the position R is defined as a reference circular arc C0, the contour of the inner surface of the carcass is located outward of the reference circular arc C0, between the position P and the position Q. The reference circular arc C0 corresponds to a natural equilibrium shape curve in the tire. In the tire, the shape of the carcass inhibits movement of the belt when the tire rolls. In the tire, BEL is inhibited. Furthermore, in each bead of the tire, the second apex is provided outward of the first apex in the axial direction. The turned-up portion of the carcass ply is passed between the first apex and the second apex. The shape of the carcass effectively alleviates a load to each bead portion. The bead portion has excellent durability. The tire achieves excellent durability.

In the tire, in order to improve the durability of the bead portion, it is not necessary to increase the number of carcass plies. In addition, it is not necessary to insert a reinforcing layer into the bead portion. In the tire, an increase in the tire weight is inhibited. The tire has a low rolling resistance.

### BRIEF DESCRIPTION OF THE DRAWINGS

FIG. 1 is a cross-sectional view of a portion of a pneumatic tire according to an embodiment of the present invention; and
FIG. 2 is an enlarged cross-sectional view of a portion of the tire in FIG. 1.

### DESCRIPTION OF THE PREFERRED EMBODIMENTS

Hereinafter, the present invention will be described in detail based on preferred embodiments with appropriate reference to the drawings.

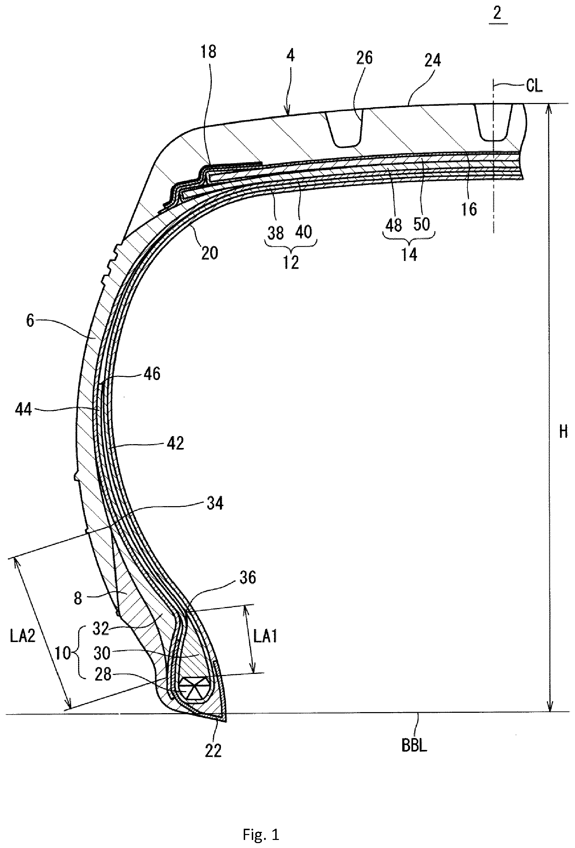

FIG. 1 shows a cross-section of a pneumatic tire 2. In this drawing, the up-down direction is the radial direction of the tire 2, the right-left direction is the axial direction of the tire 2, and the direction perpendicular to the surface of the sheet is the circumferential direction of the tire 2. In the drawing, a solid line BBL is a bead base line. The bead base line BBL is a line that defines a rim diameter (see JATMA). Although not shown, the shape of the tire 2 is symmetrical about an equator plane except for a tread pattern. The tire 2 is mounted to a small truck. The tire 2 according to the present invention is not limited to a tire for a small truck, and may be a tire for a passenger car.

The tire 2 includes a tread 4, a pair of sidewalls 6, a pair of clinches 8, a pair of beads 10, a carcass 12, a belt 14, a band 16, a pair of edge bands 18, an inner liner 20, an a pair of chafers 22. The tire 2 is of a tubeless type.

The tread 4 has a shape that is convex outward in the radial direction. The tread 4 forms a tread surface 24 that is brought into contact with a road surface. Grooves 26 are formed on the tread 4. The tread pattern is formed by the grooves 26. Although not shown, the tread 4 includes a base layer and a cap layer. The cap layer is located outward of the base layer in the radial direction. The cap layer is laminated on the base layer. The base layer is formed from a crosslinked rubber that is excellent in adhesiveness. A typical base rubber of the base layer is a natural rubber. The cap layer is formed from a crosslinked rubber that is excellent in wear resistance, heat resistance, and grip performance.

Each sidewall 6 extends from the edge of the tread 4 substantially inward in the radial direction. The radially inner edge of the sidewall 6 is joined to the clinch 8. The sidewall 6 is formed from a crosslinked rubber that is excellent in cut resistance and weather resistance. The sidewall 6 prevents the carcass 12 from being damaged.

Each clinch 8 is located substantially inward of the sidewall 6 in the radial direction. The clinch 8 extends from the edge of the sidewall 6 substantially inward in the radial direction. The clinch 8 is located outward of the bead 10 and the carcass 12 in the axial direction. The clinch 8 is formed from a crosslinked rubber that is excellent in wear resistance. The clinch 8 comes into contact with a flange of a rim.

Each bead 10 is located inward of the clinch 8 in the axial direction. The bead 10 includes a core 28, a first apex 30, and a second apex 32. The core 28 has a ring shape and includes a wound non-stretchable wire. A typical material of the wire is steel. The first apex 30 extends from the core 28 outward in the radial direction. The first apex 30 is tapered outward in the radial direction. The first apex 30 is formed from a highly hard crosslinked rubber. The second apex 32 is located outward of the first apex 30 in the axial direction. The second apex 32 is located between the clinch 8 and the carcass 12 in the axial direction. The second apex 32 is tapered outward in the radial direction and is also tapered inward in the radial direction. In the radial direction, an outer edge 34 of the second apex 32 is located outward of an end 36 of the first apex 30. The second apex 32 is formed from a highly hard crosslinked rubber.

The carcass 12 includes a carcass ply. In this embodiment, the carcass 12 includes two carcass plies, that is, a first ply 38 and a second ply 40. The first ply 38 and the second ply 40 extend on and between the beads 10 at both sides and along the tread 4 and the sidewalls 6.

The first ply 38 is turned up around the cores 28. The first ply 38 includes a main portion 42 and turned-up portions 44. The main portion 42 extends from the axially inner side of one of the beads 10 to the axially inner side of the other of the beads 10. The main portion 42 extends along the inner side of the second ply 40. The main portion 42 is laminated at the outer side of the inner liner 20. Each turned-up portion 44 extends substantially in the radial direction through the axially outer side of the first apex 30 and the axially inner side of the second apex 32. The turned-up portion 44 passes between the first apex 30 and the second apex 32. As is obvious from the drawing, an edge 46 of the turned-up portion 44 is located near the maximum width position of the tire 2. The carcass 12 of the tire 2 has a "high turn-up (HTU)" structure.

The second ply 40 extends from the axially outer side of one of the first apexes 30 to the axially outer side of the other of the first apexes 30. The second ply 40 is laminated at the outer side of the main portion 42 and the turned-up portions 44. The second ply 40 passes between the first apex 30 and the second apex 32. The second ply 40 passes between the turned-up portion 44 and the second apex 32. An end of the second ply 40 reaches the vicinity of the core 28. In this embodiment, the second ply 40 is not turned up around each core 28. The second ply 40 may be turned up around each core 28.

As is obvious from the drawing, the first ply 38 is located inward of the second ply 40. In this embodiment, the inner surface of the first ply 38 forms the inner surface of the carcass 12. The outer surface of the second ply 40 forms the outer surface of the carcass 12.

Although not shown, each of the first ply 38 and the second ply 40 includes multiple cords aligned with each other, and a topping rubber. In each of the first ply 38 and the second ply 40, the cords are covered with the topping rubber. The absolute value of the angle of each cord relative to the equator plane is 75° to 90°. In other words, the carcass 12 has a radial structure. The cords are formed from an organic fiber. Examples of preferable organic fibers include polyester fibers, nylon fibers, rayon fibers, polyethylene naphthalate fibers, and aramid fibers. The cords may be formed from steel. The carcass 12 may be formed of a single ply. The carcass 12 may be formed of three or more plies.

The belt 14 is located inward of the tread 4 in the radial direction. The belt 14 is laminated on the carcass 12. The belt 14 reinforces the carcass 12. The belt 14 includes an inner layer 48 and an outer layer 50. The outer layer 50 is laminated at the outer side of the inner layer 48. The inner surface of the inner layer 48 forms the inner surface of the belt 14. Although not shown, each of the inner layer 48 and the outer layer 50 includes multiple cords aligned with each other, and a topping rubber. Each cord is tilted relative to the equator plane. The absolute value of the tilt angle is generally not less than 10° and not greater than 35°. The direction in which each cord of the inner layer 48 is tilted relative to the equator plane is opposite to the direction in which each cord of the outer layer 50 is tilted relative to the equator plane. The material of the cords is preferably steel. An organic fiber may be used for the cords. The width, in the axial direction, of the belt 14 is preferably equal to or greater than 0.7 times of the maximum width of the tire 2. The belt 14 may include three or more layers.

The band 16 is located outward of the belt 14 in the radial direction. In the axial direction, the width of the band 16 is larger than the width of the belt 14. Although not shown, the band 16 includes a cord and a topping rubber. The band 16 has a structure in which the cord is helically wound. The band 16 has a so-called jointless structure. The cord extends substantially in the circumferential direction. The angle of the cord relative to the circumferential direction is not greater than 5° and further not greater than 2°. The belt 14 is held by this cord. Thus, lifting of the belt 14 is inhibited. The cord is formed from an organic fiber. Examples of preferable organic fibers include nylon fibers, polyester fibers, rayon fibers, polyethylene naphthalate fibers, and aramid fibers.

Each edge band 18 is located outward of the band 16 in the radial direction and in the vicinity of the edge of the band 16. Although not shown, the edge band 18 includes a cord and a topping rubber. The edge band 18 has a structure in which the cord is helically wound. The edge band 18 has a so-called jointless structure. The cord extends substantially in the circumferential direction. The angle of the cord relative to the circumferential direction is not greater than 5° and further not greater than 2°. The edge of the belt 14 is held by this cord. Thus, lifting of the belt 14 is inhibited. The cord is formed from an organic fiber. Examples of preferable organic fibers include nylon fibers, polyester fibers, rayon fibers, polyethylene naphthalate fibers, and aramid fibers.

The inner liner 20 is located inward of the carcass 12. The inner liner 20 is joined to the inner surface of the carcass 12. The inner liner 20 is formed from a crosslinked rubber that is excellent in air blocking property. A typical base rubber of the inner liner 20 is an isobutylene-isoprene-rubber or halogenated isobutylene-isoprene-rubber. The inner liner 20 maintains the internal pressure of the tire 2.

Each chafer 22 is located in the vicinity of the bead 10. When the tire 2 is mounted onto the rim, the chafer 22 comes into contact with the rim. Because of this contact, the vicinity of the bead 10 is protected. In this embodiment, each chafer 22 includes a fabric and a rubber with which the fabric is impregnated. The chafer 22 may be integrated with the clinch 8. In this case, the material of the chafer 22 is the same as the material of the clinch 8.

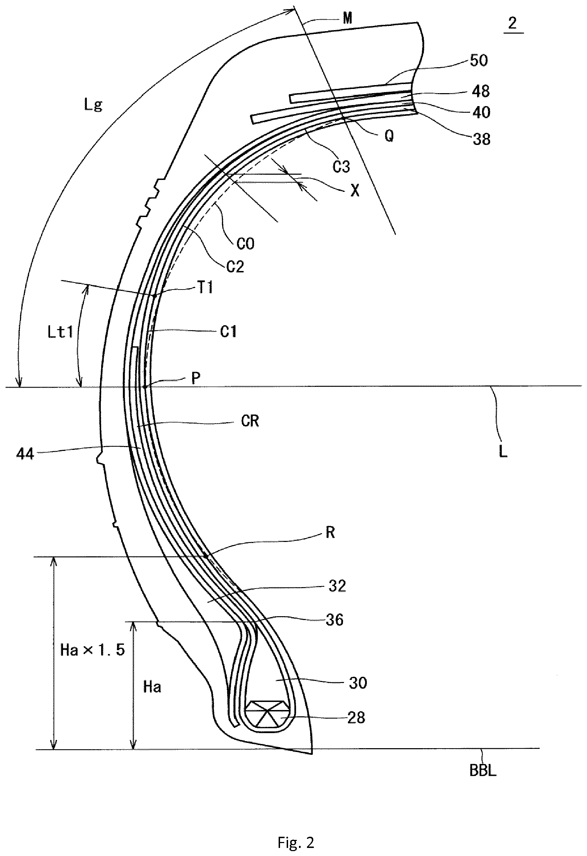

FIG. 2 shows a portion of the tire 2 shown in FIG. 1. This drawing shows only the contour of the tire 2, the contour of the first ply 38, the contour of the second ply 40, the contour of the core 28, the contour of the first apex 30, the contour of the second apex 32, the contour of the inner layer 48, and the contour of the outer layer 50. In this drawing, the up-down direction is the radial direction of the tire 2, the right-left direction is the axial direction of the tire 2, and the direction perpendicular to the surface of the sheet is the circumferential direction of the tire 2.

Although not shown, the tire 2 is mounted on a normal rim. An internal pressure AP of the tire 2 is not less than 8% and not greater than 15% of a normal internal pressure. The tire 2 is inflated with air such that the internal pressure AP is not less than 8% and not greater than 15% of the normal internal pressure. For example, for the tire 2 whose normal internal pressure is 350 kP to 600 kP, the internal pressure AP of the tire 2 is set to 50 kP. No load is applied to the tire 2.

In FIG. 2, reference character P represents a position on the inner surface of the carcass 12. In this embodiment, reference character P represents a position on the inner surface of the first ply 38. The position P is the axially outer edge of the inner surface of the carcass 12. That is, the distance in the axial direction between the inner surface of the carcass 12 in one side portion and the inner surface of the carcass 12 in the other side portion is at its maximum at the position P. The position P is also referred to as maximum width position of the carcass 12. The radial position of the position P coincides with or substantially coincides with the radial position of the maximum width position of the tire 2. The position P is located near the maximum width position of the tire 2. A straight line L is a reference line that passes through the position P and extends in the axial direction.

As described above, each carcass ply includes cords and a topping rubber covering the cords. The inner surface of the carcass 12 is a surface formed by the topping rubber. When the carcass 12 of the tire 2 is actually observed, the boundary between the topping rubber of the carcass ply and another member is not clear in some cases. In such a case, the topping rubber is considered to have a thickness that just allows the cords to be surrounded, and the inner surface of the carcass 12 is observed.

As described above, the belt 14 is laminated on the carcass 12. As shown in FIG. 2, the inner surface of the belt 14 other than the vicinity of the edge of the belt 14 is in contact with the outer surface of the carcass 12. In the vicinity of the edge of the belt 14, a gap is present between the belt 14 and the carcass 12. In FIG. 2, a solid line M is a reference line that passes through the axially outer edge of a portion where the inner surface of the belt 14 and the outer surface of the carcass 12 are in contact with each other. The reference line M is a line that is normal to the inner surface of the carcass 12. In the drawing, reference character Q represents the position at which the reference line M and the inner surface of the carcass 12 intersect each other.

As described above, each of the belt 14 and the carcass 12 includes cords and a topping rubber covering the cords. When the tire 2 is actually observed, the boundary between the topping rubber of the carcass 12 and the topping rubber of the belt 14 is not clear in some cases. In such a case, in the vicinity of the edge of the belt 14, the "axially outer edge of the portion where the inner surface of the belt 14 and the outer surface of the carcass 12 are in contact with each other" is observed as a position at which the interval between the cords of the belt 14 and the cords of the carcass 12 starts widening.

In FIG. 2, a double-headed arrow Ha represents the height in the radial direction from the bead base line BBL to the end 36 of the first apex 30. Reference character R represents a position on the inner surface of the carcass 12. The height in the radial direction from the bead base line BBL to the position R is 1.5 times of the height Ha.

In FIG. 2, a broken line C0 represents a circular arc that has a center on the reference line L and passes through the position Q and the position R. The circular arc C0 is referred to as reference circular arc. In the tire 2, the reference circular arc C0 corresponds to a natural equilibrium shape curve. The position P is located on the reference circular arc C0. As is obvious from the drawing, in the tire 2, between the position P and the position Q, the contour of the inner surface of the carcass 12 is located outward of the reference circular arc C0. Between the position P and the position Q, the contour of the inner surface of the carcass 12 projects outward from the reference circular arc C0.

As shown in FIG. 2, in this embodiment, from the position P to the position R, the contour of the inner surface of the carcass 12 substantially coincides with the reference circular arc C0. Here, the phrase "a contour substantially coincides with a circular arc" represents that the maximum value of the distance between the contour and the circular arc is not greater than a certain value. Specifically, when the maximum value of the distance between the contour and the circular arc measured along a line that is normal to the circular arc is represented by Δm, the phrase represents that the ratio (Δm/R) of the maximum value Δm relative to a radius of curvature R of the circular arc is not greater than 0.05.

When the tire 2 is inflated with air such that the internal pressure thereof that is not less than 8% and not greater than 15% of the normal internal pressure is changed to the normal internal pressure, the entirety of the outer surface of each side portion of the tire 2 other than a portion in contact with a flange expands outward. The outer surface of the side portion expands outward in the region from the vicinity of the position Q to the vicinity of the end 36 of the first apex 30.

Hereinafter, advantageous effects of the present invention will be described.

There is a tire in which occurrence of BEL is inhibited by causing the contour of a carcass to project outward from a natural equilibrium shape curve in the region from the vicinity of the maximum width position of the tire to the vicinity of each edge of the belt. In the tire, a load applied to the vicinity of the edge of the belt is reduced. A part of the load applied to this portion is applied to a bead portion. In the tire, the load applied to the bead portion is increased. This can be a factor for a decrease in the durability of the bead portion. In order to improve the durability of the bead portion, in particular, in a tire, for a small truck, whose normal internal pressure is 360 kPa to 600 kPa, the number of carcass plies is increased, or a reinforcing layer such as a filler is inserted into the bead portion. In a tire whose strength is not less than 10 PR, the carcass is composed of three or more plies and a reinforcing layer is inserted into the bead portion. These increase the tire weight. These increase the rolling resistance of the tire.

The present inventors have made detailed examination for a bead structure for improving the durability of each bead portion in a tire in which the contour of a carcass is caused to project outward of a natural equilibrium shape curve in the region from the vicinity of the maximum width position of the tire to the vicinity of each edge of the belt. As a result, the present inventors have found that a load to the bead portion which is increased by causing the carcass to have the above structure is effectively alleviated by appropriately adjusting the shape of the carcass at the bead portion.

In the pneumatic tire 2 according to the present invention, in a state where the tire 2 is inflated with air such that the internal pressure thereof is not less than 8% and not greater than 15% of the normal internal pressure, when the circular arc that has a center on the above-described reference line L and passes through the above-described position Q and position R is defined as reference circular arc C0, the contour of the inner surface of the carcass 12 is located outward of the reference circular arc C0, between the above-described position P and the position Q. The circular arc C0 corresponds to the natural equilibrium shape curve. In the tire 2, between the position P and the position Q, the contour of the inner surface of the carcass 12 is located outward of the natural equilibrium shape curve. The carcass 12 inhibits movement of the belt 14 when the tire 2 rolls. In the tire 2, BEL is inhibited.

In each bead 10 of the tire 2, the second apex 32 is provided outward of the first apex 30 in the axial direction. Each turned-up portion 44 of the carcass ply is passed between the first apex 30 and the second apex 32. The turned-up portion 44 is located inward of the turned-up portion of a conventional tire in the axial direction. The radius of curvature of the turned-up portion 44 is smaller than the radius of curvature of the turned-up portion of the conventional tire. The shape of the turned-up portion 44 effectively alleviates an increase in the load to the bead 10 portion which is caused by causing the contour of the inner surface of the carcass 12 to project outward of the natural equilibrium shape curve between the position P and the position Q. The bead 10 portion has excellent durability. By a combination of: causing the contour of the inner surface of the carcass 12 to project outward of the natural equilibrium shape curve between the position P and the position Q; and passing the turned-up portion 44 between the first apex 30 and the second apex 32, damage at the bead 10 portion is inhibited in the tire 2 while BEL is inhibited. The tire 2 achieves excellent durability.

In the tire 2, since the durability of the bead 10 portion is improved as described above, it is not necessary to increase the number of carcass plies. In addition, it is not necessary to insert a reinforcing layer into the bead 10 portion. For example, even in the tire 2, for a small truck, which is used with the normal internal pressure thereof being 360 kPa to 600 kPa, the carcass 12 can be composed of two carcass plies as shown in FIG. 1. Even in the tire 2, for a small truck, which is used with the normal internal pressure thereof being 360 kPa to 600 kPa, the bead 10 portion does not need to include a reinforcing layer. The tire 2 has a low tire weight as compared to a conventional tire. The tire 2 has a low rolling resistance.

As described above, from the position P to the position R, the contour of the inner surface of the carcass 12 preferably substantially coincides with the reference circular arc C0. Accordingly, from the position P to the position R, the carcass 12 can flexibly bend. Thus, even when a load to the bead 10 portion is increased, concentration of strain at the bead 10 portion is effectively alleviated. This contributes to the durability of the bead 10 portion.

In FIG. 2, reference character S represents a position on the inner surface of the carcass 12. In the radial direction, the position of reference character S coincides with the end 36 of the first apex 30. That is, the height in the radial direction from the bead base line BBL to the position S is Ha. In the tire 2, from the position P to the position S, the contour of the inner surface of the carcass 12 more preferably substantially coincides with the reference circular arc C0. Accordingly, from the position P to the position S, the carcass 12 can flexibly bend. Thus, concentration of strain at the bead 10 portion is effectively alleviated. In particular, concentration of strain easily occurs at the end 36 of the first apex 30. In the tire 2, concentration of strain at the end 36 of the first apex 30 is effectively alleviated.

As shown in FIG. 2, in this embodiment, the contour of the inner surface of the carcass 12 includes outwardly convex circular arcs C1, C2, and C3, from the position P toward the position Q. The circular arc C1 extends from the position P substantially outward in the radial direction. A point T1 is the tangent point between the circular arc C1 and the circular arc C2. The circular arc C1 and the circular arc C2 are tangent to each other at the point T1. That is, the circular arc C1 and the circular arc C2 have a common tangent line at the tangent point T1. Furthermore, the circular arc C2 and the circular arc C3 are tangent to each other. As described above, between the position P and the position Q, the contour of the inner surface of the carcass 12 preferably includes three or more circular arcs that are tangent to each other. Accordingly, the carcass 12 contributes to flexible bending of the side portion. In the tire 2, concentration of strain at the side portion is prevented.

The ratio (R1/RO) of a radius of curvature R1 of the circular arc C1 relative to a radius of curvature RO of the reference circular arc C0 is preferably not less than 1.1. By making the ratio (R1/RO) not less than 1.1, the carcass 12 effectively inhibits movement of the belt 14 when the tire 2 rolls. In the tire 2, BEL is inhibited. From this standpoint, the ratio (R1/RO) is more preferably not less than 1.2. The ratio (R1/RO) is preferably not greater than 1.5. By making the ratio (R1/RO) not greater than 1.5, the carcass 12 has an appropriate bend between the position P and the position Q. This contributes to moderate bending of the side portion between the position P and the position Q when a load is applied to the tire 2. Thus, an increase in a load at the bead 10 portion is inhibited. The bead 10 portion achieves excellent durability. From this standpoint, the ratio (R1/RO) is more preferably not greater than 1.4.

In FIG. 2, a double-headed arrow Lq represents the distance between the position P and the position Q measured along the inner surface of the carcass 12. A double-headed arrow Lt1 represents the distance between the position P and the tangent point T1 measured along the inner surface of the carcass 12. The ratio (Lt1/Lq) of the distance Lt1 relative to the distance Lq is preferably not less than 0.2. By making the ratio (Lt1/Lq) not less than 0.2, the carcass 12 effectively inhibits movement of the belt 14 when the tire 2 rolls. In the tire 2, BEL is inhibited. From this standpoint, the ratio (Lt1/Lq) is more preferably not less than 0.3. The ratio (Lt1/Lq) is preferably not greater than 0.5. By making the ratio (Lt1/Lq) not greater than 0.5, the carcass 12 has an appropriate bend between the position P and the position Q. This contributes to moderate bending of the side portion between the position P and the position Q when a load is applied to the tire 2. Thus, an increase in a load at the bead 10 portion is inhibited. The bead 10 portion achieves excellent durability. From this standpoint, the ratio (Lt1/Lq) is more preferably not greater than 0.4.

In FIG. 2, a double-headed arrow X represents the maximum distance between the inner surface of the carcass 12 and the reference circular arc C0 in the region between the position P and the position Q. The distance between the inner surface of the carcass 12 and the reference circular arc C0 is measured along a line that is normal to the reference circular arc C0. That is, the maximum distance X is the maximum value of the distance between the inner surface of the carcass 12 and the reference circular arc C0 in the region between the position P and the position Q which distance is measured along a line that is normal to the reference circular arc C0.

The ratio (X/RO) of the maximum distance X relative to the radius of curvature RO is preferably not less than 1%. By making the ratio (X/RO) not less than 1%, the carcass 12 effectively inhibits movement of the belt 14 when the tire 2 rolls. In the tire 2, BEL is inhibited. From this standpoint, the ratio (X/RO) is more preferably not less than 2%. The ratio (X/RO) is preferably not greater than 5%. By making the ratio (X/RO) not greater than 5%, the carcass 12 has an appropriate bend between the position P and the position Q. This contributes to moderate bending of the side portion between the position P and the position Q when a load is applied to the tire 2. Thus, an increase in a load at the bead 10 portion is inhibited. The bead 10 portion achieves excellent durability. From this standpoint, the ratio (X/RO) is more preferably not greater than 4%.

As shown in FIG. 2, the contour of the inner surface of each turned-up portion 44 includes, at the inner side of the reference line L, an outwardly convex circular arc CR extending substantially inward in the radial direction. In this embodiment, from the reference line L to the vicinity of the position R, the contour of the inner surface of the turned-up portion 44 is composed of the outwardly convex circular arc CR. In this embodiment, the edge 46 of the turned-up portion 44 is located outward of the reference line L. In the tire 2 in which the edge 46 of the turned-up portion 44 is located inward of the reference line L, from the edge 46 to the vicinity of the position R, the contour of the inner surface of the turned-up portion 44 is composed of the circular arc CR.

A radius of curvature Rr of the circular arc CR is preferably smaller than the radius of curvature R1. Accordingly, the turned-up portion 44 effectively alleviates an increase in the load to the bead 10 portion which is caused by causing the contour of the inner surface of the carcass 12 to project outward of the natural equilibrium shape curve between the position P and the position Q. The bead 10 portion has excellent durability. From this standpoint, the ratio (Rr/R1) of the radius of curvature Rr relative to the radius of curvature R1 is more preferably not greater than 0.9 and further preferably not greater than 0.8.

The ratio (Rr/R1) is preferably not less than 0.7. By making the ratio (Rr/R1) not less than 0.7, concentration of strain caused by bending of the bead 10 portion becoming large is prevented.

In FIG. 1, a double-headed arrow H represents the height from the bead base line BBL to the radially outer edge of the tire 2. The height H is a cross-sectional height of the tire 2. A double-headed arrow LA1 represents the length of the first apex 30. The length LA1 is represented by the length from the axial center of the bottom surface of the first apex 30 to the end of the first apex 30. A double-headed arrow LA2 represents the length of the second apex 32. The length LA2 is the distance between the outer edge 34 and the inner edge of the second apex 32. The height H, the length LA1, and the length LA2 are measured in a state where the tire 2 is mounted on the normal rim and inflated with air to the normal internal pressure and no load is applied to the tire 2.

The ratio (LA1/H) of the length LA1 relative to the height H is preferably not less than 5%. By making the ratio (LA1/H) not less than 5%, the first apex 30 can effectively contribute to the stiffness of the bead 10 portion. The tire 2 has excellent durability. The ratio (LA1/H) is preferably not greater than 15%. By making the ratio (LA1/H) not greater than 15%, influence of the first apex 30 on the weight is inhibited. The tire 2 has a low tire weight. The tire 2 has a low rolling resistance.

The ratio (LA2/H) of the length LA2 relative to the height H is preferably not less than 20%. By making the ratio (LA2/H) not less than 20%, the second apex 32 effectively contributes to the stiffness of the bead 10 portion. The tire 2 achieves excellent durability. From this standpoint, the ratio (LA2/H) is more preferably not less than 25%. The ratio (LA2/H) is preferably not greater than 50%. By making the ratio (LA2/H) not greater than 50%, influence of the second apex 32 on the vertical stiffness constant is inhibited. With the tire 2, favorable ride comfort is maintained. Furthermore, influence of the second apex 32 on the weight of the tire 2 is inhibited. Influence of the second apex 32 on the rolling resistance is inhibited. From this standpoint, the ratio (LA2/H) is more preferably not greater than 45%.

In the tire 2, a complex elastic modulus E1 of the first apex 30 is preferably not less than 60 MPa. By making the elastic modulus E1 not less than 60 MPa, the first apex 30 contributes to support of the tire 2. The tire 2 has excellent durability. The complex elastic modulus E1 is preferably not greater than 70 MPa. By making the elastic modulus E1 not greater than 70 MPa, influence of the first apex 30 on the stiffness is inhibited. With the tire 2, favorable ride comfort is maintained.

In the tire 2, a complex elastic modulus E2 of the second apex 32 is preferably not less than 60 MPa. By making the elastic modulus E2 not less than 60 MPa, the second apex 32 contributes to the stiffness. The tire 2 has excellent durability. The complex elastic modulus E2 is preferably not greater than 70 MPa. By making the elastic modulus E2 not greater than 70 MPa, influence of the second apex 32 on the stiffness is inhibited. With the tire 2, favorable ride comfort is maintained.

In the present invention, the complex elastic modulus E1 of the first apex 30 and the complex elastic modulus E2 of the second apex 32 are measured in compliance with the standard of "JIS K 6394". The measurement conditions are as follows.
Viscoelasticity spectrometer: "VESF-3" of Iwamoto Seisakusho
Initial strain: 10%
Dynamic strain: ±1%
Frequency: 10 Hz
Deformation mode: tension
Measurement temperature: 70°C

In the present specification, the normal rim means a rim specified in a standard on which the tire 2 is based. The "standard rim" in the JATMA standard, the "Design Rim" in the TRA standard, and the "Measuring Rim" in the ETRTO standard are normal rims. In the present specification, the normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

### EXAMPLES

Hereinafter, effects of the present invention are shown by means of examples, but the present invention should not be construed in a limited manner based on the description of these examples.

### [Example 1]

A pneumatic tire of Example 1 having the configuration shown in FIG. 1 and the specifications shown in Table 1 below was obtained. The size of the tire was set to "205/75R16C 113/111R". In the cells for "Number of carcass plies" in Table 1, a number before "-" represents the number of plies having a turned-up portion, and a number after "-" represents the number of plies not having a turned-up portion. In the tire of Example 1, the carcass includes one ply having a turned-up portion and one ply not having a turned-up portion. Each bead portion of the tire does not include a filler for reinforcement. This is represented as "Absence" in the cell for "Presence/absence of filler". In the tire, the radius of curvature RO of the reference circular arc C0 was 65 mm. The ratio (Lt1/Lq) was set to 0.3. The values of the radius of curvature RO and the ratio (Lt1/Lq) and the values of the ratios in Table 1 were measured in a state where the tire was mounted on a normal rim (5.5J) and inflated with air such that the internal pressure thereof was 50 kPa, and no load was applied to the tire. The normal internal pressure of the tire is 525 kPa. Therefore, the ratio of the internal pressure of the tire at this time relative to the normal internal pressure is 9.5%.

### [Comparative Example 1]

In a tire of Comparative Example 1, the carcass ply includes three plies having a turned-up portion. Each bead portion of the tire includes a filler for reinforcement. Each bead of the tire does not include a second apex. In the bead, the ratio (LA1/H) and the ratio (Rr/R1) are as shown in Table 1. In the tire, the specifications other than these are the same as those of the tire of Example 1.

### [Comparative Example 2]

A tire of Comparative Example 2 was obtained in the same manner as in Comparative Example 1, except that the carcass ply includes two plies having a turned-up portion.

### [Comparative Example 3]

A tire of Comparative Example 3 was obtained in the same manner as in Example 1, except that each bead does not include a second apex and the ratio (LA1/H) and the ratio (Rr/R1) are as shown in Table 1.

### [Example 2]

A tire of Example 2 was obtained in the same manner as in Example 1, except that the carcass ply includes two plies having a turned-up portion.

### [Comparative Example 4]

A tire of Comparative Example 4 was obtained in the same manner as in Example 1, except that in this tire, the contour of the inner surface of the carcass does not project outward from the reference circular arc between the position P and the position Q, the contour of the inner surface of the carcass substantially coincides with the reference circular arc between the position P and the position Q, and therefore the ratio (R1/RO) is 1.

### [Example 3]

A tire of Example 3 was obtained in the same manner as in Example 1, except that the radius of curvature R1 is changed such that the ratio (R1/RO) is as shown in Table 2. Since the radius of curvature R1 is changed, the ratio (Rr/R1) is also changed.

### [Durability]

Each tire was mounted onto a normal rim (size: 5.5J) and inflated with air to an internal pressure of 525 kPa. The tire was mounted to a drum type tire testing machine, and a vertical load of 15.74 kN was applied to the tire. Running with the tire on a drum having a radius of 1.7 m at a speed of 80 km/h was performed. The running distance until damage to the tire was observed was measured. The results are indicated as indexes in Tables 1 and 2 below with the value of Comparative Example 1 being 100. The higher the value is, the better the evaluation is. The location of the damage was the belt edge (BEL) in Comparative Example 4. In the other examples, the location of the damage was the bead portion (separation between the first apex and the carcass or separation between the clinch and the carcass).

### [Weight]

The weight of each tire was measured. The inverses of the results are indicated as indexes in Tables 1 and 2 below with the value of Comparative Example 1 being 100. The higher the value is, the lower the weight is. The higher the value is, the better the evaluation is.

### [Rolling Resistance]

A rolling resistance was measured in compliance with the standard of "ISO 28580", using a rolling resistance testing machine, under the following measurement conditions.
Used rim: 5.5J
Internal pressure: 525 kPa
Load: 15.74 kN
Speed: 80 km/h
The inverses of the results are indicated as indexes in Tables 1 and 2 below with the value of Comparative Example 1 being 100. The higher the value is, the lower the rolling resistance is. The higher the value is, the better the evaluation is.

### [Table 1]

**Table 1 Results of Evaluation**

| | Comparative Example 1 | Comparative Example 2 | Comparative Example 3 | Example 1 | Example 2 |
|---|---|---|---|---|---|
| Number of carcass plies | 3-0 | 2-0 | 1-1 | 1-1 | 2-0 |
| Presence/absence of filler | Presence | Presence | Absence | Absence | Absence |
| Presence/absence of second apex | Absence | Absence | Absence | Presence | Presence |
| Ratio (R1/R0) | 1.3 | 1.3 | 1.3 | 1.3 | 1.3 |
| Ratio (Rr/R1) | 1.0 | 1.0 | 1.0 | 0.8 | 0.8 |
| Ratio (LA1/H) [%] | 40 | 40 | 40 | 10 | 10 |
| Durability index | 100 | 85 | 80 | 105 | 110 |
| Weight index | 100 | 115 | 120 | 115 | 105 |
| Rolling resistance index | 100 | 110 | 115 | 110 | 105 |

### [Table 2]

**Table 2 Results of Evaluation**

| | Comparative Example 4 | Example 3 |
|---|---|---|
| Number of carcass plies | 1-1 | 1-1 |
| Presence/absence of filler | Absence | Absence |
| Presence/absence of second apex | Presence | Presence |
| Ratio (R1/R0) | 1.0 | 1.1 |
| Ratio (Rr/R1) | 1.3 | 0.9 |
| Ratio (LA1/H) [%] | 10 | 10 |
| Durability index | 95 | 103 |
| Weight index | 110 | 115 |
| Rolling resistance index | 105 | 110 |

As shown in Tables 1 and 2, the evaluation is higher in the tires of the examples than in the tires of the comparative examples. From the results of evaluation, advantages of the present invention are clear.

The pneumatic tire described above is also applicable to various vehicles.

## Claims

1. A pneumatic tire (2) comprising a pair of beads (10), a carcass (12), and a belt (14), wherein
each bead (10) includes a core (28), and a first apex (30) extending from the core (28) outward in a radial direction,
the carcass (12) includes a carcass ply (38),
the carcass ply (38) includes a main portion (42) extending from one of the beads (10) to the other of the beads (10) and a turned-up portion (44),
the belt (14) is laminated at a radially outer side of the carcass (12),
in a state where the tire (2) is mounted on a normal rim, an internal pressure of the tire (2) is set to be not less than 8% and not greater than 15% of a normal internal pressure, and no load is applied to the tire (2),
when a position of an axially outer edge of an inner surface of the carcass (12) is denoted by P, wherein the radial position of the position P substantially coincides with the radial position of the maximum width position of the tire (2), a straight line passing through the position P and extending in the axial direction is defined as a reference line L, a position at which the inner surface of the carcass (12) intersects a line that is normal to the inner surface of the carcass (12) and is drawn from an axially outer edge of a portion where the carcass (12) and the belt (14) are in contact with each other is denoted by Q, a position on the inner surface of the carcass (12) to which position a distance in the radial direction from a bead base line (BBL) is 1.5 times of a distance in the radial direction from the bead base line (BBL) to an end of the first apex (30) is denoted by R, and a circular arc having a center on the reference line L and passing through the position Q and the position R is defined as a reference circular arc C0,
between the position P and the position Q, a contour of the inner surface of the carcass (12) is located outward of the reference circular arc C0, and
an entirety of an outer surface of each side portion of the tire (2) expands outward when the tire (2) is inflated with air such that the internal pressure thereof that is not less than 8% and not greater than 15% of the normal internal pressure is changed to the normal internal pressure,
wherein, between the position P and the position Q, the contour of the inner surface of the carcass (12) includes three or more outwardly convex circular arcs (C1, C2, C3) that are tangent to each other,
**characterized in that**
each bead (10) includes a second apex (32) located outward of the first apex (30) in an axial direction, and the turned-up portion (44) passes between the first apex (30) and the second apex (32) and extends substantially in the radial direction,
wherein
when a circular arc extending from the position P substantially outward in the radial direction, of the circular arcs included in the contour of the inner surface of the carcass (12), is denoted by C1,
a ratio (R1/RO) of a radius of curvature R1 of the circular arc C1 relative to a radius of curvature RO of the reference circular arc C0 is not less than 1.1 and not greater than 1.5.

2. The tire (2) according to claim 1, wherein, from the position P to the position R, the contour of the inner surface of the carcass (12) substantially coincides with the circular arc C0.

3. The tire (2) according to claim 1, wherein
a contour of an inner surface of the turned-up portion (44) includes, at an inner side of the reference line L, a circular arc CR extending substantially inward in the radial direction, and
when a circular arc extending from the position P substantially outward in the radial direction, of the circular arcs included in the contour of the inner surface of the carcass (12), is denoted by C1,
a ratio (Rr/R1) of a radius of curvature Rr of the circular arc CR relative to a radius of curvature R1 of the circular arc C1 is not greater than 0.9.

4. The tire (2) according to any one of claims 1 to 3, wherein the tire (2) is a tire, for a small truck, whose normal internal pressure is not less than 350 kPa and not greater than 600 kPa.

## Patentansprüche

1. Luftreifen (2), umfassend ein Paar Wülste (10), eine Karkasse (12), und einen Gürtel (14), wobei
jeder Wulst (10) einen Kern (28) und einen ersten Kernreiter (30), der sich von dem Kern (28) in einer radialen Richtung nach außen erstreckt, umfasst,
die Karkasse (12) eine Karkasslage (38) umfasst,
die Karkasslage (38) einen Hauptabschnitt (42), der sich von einem der Wülste (10) zu dem anderen der Wülste (10) erstreckt, und einen Umschlagabschnitt (44) umfasst,
der Gürtel (14) an einer radial äußeren Seite der Karkasse (12) laminiert ist,
in einem Zustand, in welchem der Reifen (2) auf eine normale Felge aufgezogen ist, ein Innendruck des Reifens (2) auf nicht kleiner als 8 % und nicht größer als 15 % eines normalen Innendrucks festgelegt ist, und keine Last auf den Reifen (2) aufgebracht ist,
wenn eine Position einer axialen äußeren Kante einer Innenfläche der Karkasse (12) mit P bezeichnet wird, wobei die radiale Position der Position P im Wesentlichen mit der radialen Position der Position maximaler Breite des Reifens (2) zusammenfällt, eine gerade Linie, die durch die Position P verläuft und sich in der axialen Richtung erstreckt, als eine Bezugslinie L definiert wird, eine Position, an welcher die Innenfläche der Karkasse (12) eine Linie schneidet, die senkrecht zu der Innenfläche der Karkasse (12) steht und von einer axialen äußeren Kante eines Abschnitts gezogen wird, wo die Karkasse (12) und der Gürtel (14) miteinander in Kontakt sind, mit Q bezeichnet wird, eine Position auf der Innenfläche der Karkasse (12), zu welcher Position ein Abstand in der radialen Richtung von der Wulstbasislinie (BBL) aus das 1,5-fache eines Abstandes in der radialen Richtung von der Wulstbasislinie (BBL) zu einem Ende des ersten Kernreiters (30) beträgt, mit R bezeichnet wird, und ein Kreisbogen, der einen Mittelpunkt auf der Bezugslinie L aufweist und durch die Position Q und die Position R verläuft, als ein Bezugskreisbogen C0 bezeichnet wird,
zwischen der Position P und der Position Q eine Kontur der Innenfläche der Karkasse (12) außen von dem Bezugskreisbogen C0 gelegen ist, und
eine Gesamtheit einer Außenfläche von jedem Seitenabschnitt des Reifens (2) sich nach außen ausdehnt, wenn der Reifen (2) mit Luft derart aufgepumpt wird, dass sein Innendruck, der nicht kleiner als 8 % und nicht größer als 15 % des normalen Innendrucks ist, auf den normalen Innendruck verändert wird,
wobei, zwischen der Position P und der Position Q die Kontur der Innenfläche der Karkasse (12) drei oder mehr nach außen konvexe Kreisbögen (C1, C2, C3) umfasst, die tangential zueinander sind,
**dadurch gekennzeichnet, dass**
jeder Wulst (10) einen zweiten Kernreiter (32) umfasst, der in einer axialen Richtung außen von dem ersten Kernreiter (30) gelegen ist, und der Umschlagabschnitt (44) zwischen dem ersten Kernreiter (30) und dem zweiten Kernreiter (32) verläuft und sich im Wesentlichen in der radialen Richtung erstreckt,
wobei,
wenn ein Kreisbogen, der sich von der Position P im Wesentlichen in der radialen Richtung nach außen erstreckt, von den Kreisbögen, die in der Kontur der Innenfläche der Karkasse (12) enthalten sind, mit C1 bezeichnet wird,
ein Verhältnis (R1/RO) eines Krümmungsradius R1 des Kreisbogens C1 relativ zu einem Krümmungsradius RO des Bezugskreisbogens C0 nicht kleiner als 1,1 und nicht größer als 1,5 ist.

2. Reifen (2) nach Anspruch 1, wobei von der Position P zu der Position R die Kontur der Innenfläche der Karkasse (12) im Wesentlichen mit dem Kreisbogen C0 zusammenfällt.

3. Reifen (2) und nach Anspruch 1, wobei
eine Kontur einer Innenfläche des Umschlagabschnitts (44) an einer Innenseite der Bezugslinie L einen Kreisbogen CR umfasst, der sich in der radialen Richtung im Wesentlichen nach innen erstreckt, und
wenn ein Kreisbogen, der sich von der Position P im Wesentlichen in der radialen Richtung nach außen erstreckt, der Kreisbögen, die in der Kontur der Innenfläche der Karkasse (12) enthalten sind, mit C1 bezeichnet wird,
ein Verhältnis (Rr/R1) eines Krümmungsradius Rr des Kreisbogens CR relativ zu dem Krümmungsradius R1 des Kreisbogens C1 nicht größer als 0,9 ist.

4. Reifen (2) nach einem der Ansprüche 1 bis 3, wobei der Reifen (2) ein Reifen für einen Kleinlastwagen ist, dessen normaler Innendruck nicht kleiner als 350 kPa und nicht größer als 600 kPa ist.

## Revendications

1. Bandage pneumatique (2) comprenant une paire de talons (10), une carcasse (12), et une ceinture (14), dans lequel
chaque talon (10) inclut une âme (28), et un premier sommet (30) s'étendant depuis l'âme (28) vers l'extérieur dans une direction radiale,
la carcasse (12) inclut une nappe de carcasse (38),
la nappe de carcasse (38) inclut une portion principale (42) s'étendant depuis l'un des talons (10) jusqu'à l'autre des talons (10) et une portion retournée vers le haut (44),
la ceinture (14) est stratifiée au niveau d'un côté radialement extérieur de la carcasse (12),
dans un état dans lequel le pneumatique (2) est monté sur une jante normale, une pression interne du pneumatique (2) est fixée pour ne pas être moins de 8 % et pas plus de 15 % d'une pression interne normale, et aucune charge n'est appliquée au pneumatique (2),
quand une position d'un bord axialement extérieur d'une surface intérieure de la carcasse (12) est désigné par P, de sorte que la position radiale de la position P coïncide sensiblement avec la position radiale de la position de largeur maximum du pneumatique (2), une ligne droite qui passe par la position P et qui s'étend dans la direction axiale est définie comme ligne de référence L, une position à laquelle la surface intérieure de la carcasse (12) recoupe une ligne normale à la surface intérieure de la carcasse (12) et tirée depuis un bord axialement extérieur d'une portion où la carcasse (12) et la ceinture (14) sont en contact l'une avec l'autre est désignée par Q, une position sur la surface intérieure de la carcasse (12), position à laquelle une distance dans la direction radiale depuis une ligne de base de talon (BBL) est 1,5 fois une distance dans la direction radiale depuis la ligne de base de talon (BBL) jusqu'à une extrémité du premier sommet (30) est désignée par R, et un arc circulaire ayant un centre sur la ligne de référence L et passant par la position Q et la position R est défini comme arc circulaire de référence C0,
entre la position P et la position Q, un contour de la surface intérieure de la carcasse (12) est situé à l'extérieur de l'arc circulaire de référence C0, et
la totalité d'une surface extérieure de chaque portion latérale du pneumatique (2) est en expansion vers l'extérieur quand le pneumatique (2) est gonflé avec de l'air de telle façon que sa pression interne qui n'est pas inférieure à 8 % et pas supérieure à 15 % de la pression interne normale est changée vers la pression interne normale,
dans lequel, entre la position P et la position Q, le contour de la surface intérieure de la carcasse (12) inclut trois ou plusieurs arcs circulaires convexes vers l'extérieur (C1, C2, C3) qui sont tangents les uns aux autres,
**caractérisé en ce que**
chaque talon (10) inclut un second sommet (32) situé à l'extérieur du premier sommet (30) dans une direction axiale, et la portion retournée vers le haut (44) passe entre le premier sommet (30) et le second sommet (32) et s'étend sensiblement dans la direction radiale,
dans lequel, quand un arc circulaire s'étendant depuis la position P sensiblement vers l'extérieur dans la direction radiale, parmi les arcs circulaires inclus dans le contour de la surface intérieure de la carcasse (12), est désigné par C1,
un rapport (R1/R0) d'un rayon de courbure R1 de l'arc circulaire C1 en relation à un rayon de courbure R0 de l'arc circulaire de référence C0 n'est pas inférieur à 1,1 et n'est pas supérieur à 1,5.

2. Pneumatique (2) selon la revendication 1, dans lequel, depuis la position P jusqu'à la position R, le contour de la surface intérieure de la carcasse (12) coïncide sensiblement avec l'arc circulaire C0.

3. Pneumatique (2) selon la revendication 1, dans lequel un contour d'une surface intérieure de la portion retournée vers le haut (44) inclut, au niveau d'un côté intérieur de la ligne de référence L, un arc circulaire CR s'étendant sensiblement vers l'intérieur dans la direction radiale, et
quand un arc circulaire s'étendant depuis la position P sensiblement vers l'extérieur dans la direction radiale, parmi les arcs circulaires inclus dans le contour de la surface intérieure de la carcasse (12), est désigné par C1,
un rapport (Rr/R1) d'un rayon de courbure Rr de l'arc circulaire CR en relation à un rayon de courbure R1 de l'arc circulaire C1 n'est pas supérieur à 0,9.

4. Pneumatique (2) selon l'une quelconque des revendications 1 à 3, dans lequel le pneumatique (2) est un pneumatique pour un petit poids-lourd, dont la pression interne normale n'est pas inférieure à 350 kPa et n'est pas supérieur à 600 kPa.
